## Europäisches Patentamt

(19) **European Patent Office**

**Office européen des brevets**

(11) Veröffentlichungsnummer: **0 216 292**
**B1**

(12) # EUROPÄISCHE PATENTSCHRIFT

(45) Veröffentlichungstag der Patentschrift:
28.12.88

(51) Int. Cl.⁴: **C 01 B 33/02**

(21) Anmeldenummer: **86112769.4**

(22) Anmeldetag: **16.09.86**

(54) Verfahren zur Aufarbeitung von chlorwasserstoffhaltigen Abgasen.

(30) Priorität: **20.09.85 DE 3533577**

(43) Veröffentlichungstag der Anmeldung:
**01.04.87 Patentblatt 87/14**

(45) Bekanntmachung des Hinweises auf die Patenterteilung:
**28.12.88 Patentblatt 88/52**

(84) Benannte Vertragsstaaten:
**DE FR GB IT**

(56) Entgegenhaltungen:
**EP-A- 0 114 226**
**DE-A- 2 820 617**
**DE-B- 1 185 593**

(73) Patentinhaber: **Wacker-Chemitronic Gesellschaft für Elektronik-Grundstoffe mbH,**
**Johannes-Hess-Strasse 24, D-8263 Burghausen (DE)**

(72) Erfinder: **Lang, Winfried, Dr. Dipl.-Chem.,**
**Oberkriebach 66, A-5122 Ach (AT)**
Erfinder: **Schwab, Michael, Dr. Dipl.-Chem.,**
**Feldstrasse 16, D-8265 Neuötting (DE)**

ACTORUM AG

## Beschreibung

Die Erfindung betrifft ein Verfahren zur Aufarbeitung von chlorsilan- und chlorwasserstoffhaltigen Abgasen durch Hydrolyse.

Bei der Herstellung von Reinstsilicium fallen bei einer Reihe von Teilprozessen wie etwa der Siliciumabscheidung durch Zersetzung von Trichlorsilan, der Konvertierung von Siliciumtetrachlorid zu Trichlorsilan oder der Herstellung von Trichlorsilan aus elementarem Silicium Abgase an, welche, zumeist neben Wasserstoff, einen Restanteil an Chlorwasserstoff und Chlorsilanen aufweisen. Dieser enthaltene bzw. aus dem Chlorsilan freisetzbare Chlorwasserstoff stellt jedoch an sich eine wertvolle und vielseitig einsetzbare Verbindung dar, so dass nicht nur aus Gründen des Umweltschutzes seine möglichst vollständige Rückgewinnung aus den Abgasen anzustreben ist.

Zur Lösung dieses Problems sind bisher zwei Verfahren bekannt geworden. Gemäss der DE-C-1 185 593 wird der Abgasstrom mit Wasser behandelt, wobei die Chlorsilane hydrolysiert und der Chlorwasserstoff in dem Wasser gelöst werden. Für die dabei entstehende verdünnte, wässrige Salzsäure gibt es jedoch kaum Verwendungsmöglichkeiten, so dass sie erst mit hohem Energieaufwand aufkonzentriert werden muss.

Gemäss der Europäischen Patentanmeldung EP-A-0 114 226 wird das Abgasgemisch mit konzentrierter Salzsäure behandelt. In dieser werden die entstehenden Hydrolyseprodukte der Chlorsilane suspendiert und können durch Filtration entfernt werden. Der Chlorwasserstoff verbleibt im Gemisch mit den weiteren gasförmigen Komponenten in der Gasphase. Zu seiner Abtrennung und Rückgewinnung ist danach noch ein weiterer Verfahrensschritt erforderlich.

Aufgabe der Erfindung war es, ein Verfahren anzugeben, nach dem in einfacherer Weise der in den genannten Abgasen enthaltene freie oder in Chlorsilanen gebundene Chlorwasserstoff in Gasform zurückgewonnen werden kann.

Gelöst wird die Aufgabe durch ein Verfahren, welches dadurch gekennzeichnet ist, dass in einer Absorptionsstation die Abgase in wässriger, mindestens azeotroper, mit einer Temperatur von weniger als 60°C vorgelegter Salzsäure hydrolysiert werden, wobei in der flüssigen Phase der entstandene Chlorwasserstoff absorbiert und die festen Hydrolyseprodukte suspendiert werden, während die in der Gasphase verbliebenen Restgase abgetrennt werden, dass in einer Filtrierstation die festen Hydrolyseprodukte aus der flüssigen Phase entfernt werden, und dass in einer Desorptionsstation der in der flüssigen Phase absorbierte Chlorwasserstoff unter Bildung von azeotroper wässriger Salzsäure freigesetzt wird.

Als Absorptionsstation eignen sich Anordnungen, in denen ein inniger Kontakt zwischen Abgas und Salzsäure hergestellt werden kann und die die Entnahme der in der Gasphase verbleibenden Restgase sowie der mit den Hydrolyseprodukten angereicherten flüssigen Phase gestatten. Bevorzugt werden als Abgaswäscher bezeichnete Kolonnen eingesetzt, in denen das Abgas und die zumeist über Düsen eingespeiste, vorteilhaft eingesprühte Flüssigkeit vielfach im Gegenstrom geführt und miteinander vermischt werden.

Bei dem Hydrolyseschritt zersetzen sich die im Abgas enthaltenen Chlorsilane unter Bildung von festen Kieselsäureprodukten und Chlorwasserstoff. Letzterer wird, ebenso wie der bereits ursprünglich in dem Abgas vorhandene Chlorwasserstoff, in der eingespeisten Salzsäure absorbiert, wobei der Vorgang zweckmässig adiabatisch durchgeführt wird. Die entstandenen festen Hydrolyseprodukte bleiben zunächst in der Salzsäure suspendiert. Auch in dem Abgas etwa vorhandene flüchtige Dotierstoffverbindungen wie etwa Bortrichlorid oder Phosphoroxichlorid werden hydrolysiert und gehen mit den Hydrolyseprodukten in die salzsaure flüssige Phase über, so dass in der Gasphase lediglich die unter den vorliegenden Bedingungen inerten Gase wie z.B. Wasserstoff, Stickstoff oder Edelgas verbleiben.

Um eine möglichst weitgehende Absorption des Chlorwasserstoffgases zu erhalten, wird die wässrige, mindestens azeotrope Salzsäure zweckmässig möglichst kühl, d.h. mit einer Temperatur von weniger als 60°C, vorteilhaft von 10-35°C vorgelegt. Grundsätzlich ist zwar auch der Einsatz höherer Temperaturen bis knapp unterhalb des Siedepunktes des azeotropen Gemisches möglich; dann erhöht sich jedoch wegen der geringer werdenden Absorptionskapazität die zur Absorption des anfallenden Chlorwasserstoffes erforderliche Salzsäuremenge weit über das wirtschaftlich vertretbare Mass hinaus.

Gegebenenfalls kann auch bei erhöhtem Druck gearbeitet werden, um die Absorption des Chlorwasserstoffes in der Salzsäure zu verbessern. Die mögliche Druckobergrenze ist dabei grundsätzlich durch den Wert vorgegeben, für den die jeweils vorliegende Anlage ausgelegt ist, also gemeinhin bei vertretbarem apparativem und energetischem Aufwand bei etwa 3 bar. In den meisten Fällen wird man jedoch bei Atmosphärendruck arbeiten, um den apparativen Aufwand gering zu halten.

Da der von der Salzsäure aufgenommene Chlorwasserstoff danach bei der Desorption in der Regel durch einen Destillationsschritt wieder freigesetzt wird, entspricht die Zusammensetzung der dabei anfallenden Salzsäure der des unter den Desorptionsbedingungen azeotropen Chlorwasserstoff/Wasser-Gemisches. So enthält z.B. bei Atmosphärendruck die azeotrope wässrige Salzsäure ca. 20 Gew.-% Chlorwasserstoff (20,17 Gew.-% bei 1 bar abs.), bei einem Druck von 3 bar jedoch ca. 17 Gew.-%.

Grundsätzlich ist es zu Beginn des Prozesses auch möglich, wässrige Salzsäuren anderer Konzentrationen vorzulegen, sofern diese die Absorption von Chlorwasserstoff gestatten. Bei der bevorzugten Ausgestaltung des Verfahrens als Kreisprozess fällt jedoch auch in diesen Fällen nach dem ersten Durchlaufen der Desorptionsstation die Salzsäure in azeotroper Zusammensetzung an und kann in dieser Form erneut in die Absorptionsstation eingespeist werden. Selbstverständlich ist jedoch eine Entnahme und anderweitige Verwendung, z.B. zur Herstellung von Chloriden, nicht ausgeschlossen. Auch höher konzentrierte Salzsäuren lassen sich einsetzen, sofern sie noch gasförmigen Chlorwasserstoff aufnehmen können. Dadurch wird es auch möglich, den Salzsäurestrom vor dem Einleiten in die Desorptionsstation mehrmals die Absorptionsstation durchlaufen zu lassen, oder ihn in zwei oder mehrere Teilströme aufzuteilen, von denen z.B. einer in die Absorptionsstation, einer in die Desorptionsstation eingeleitet wird. Die als «konzentrierte Salzsäure» bezeichnete Lösung (ca. 38 gewichts-%ig) eignet sich naturgmäss nicht zur Absorption, da sie keinen Chlorwasserstoff mehr aufzunehmen vermag.

Die in der Absorptionsstation sich bildende und diese verlassende Gasphase enthält neben den ohnehin in die flüssige Phase übergehenden gasförmigen Bestandteilen der Abgase auch einen bestimmten Chlorwasserstoffrestanteil, der dem über der jeweils vorliegenden Salzsäure sich einstellenden Chlorwasserstoffpartialdruck entspricht. Um diesen Anteil gering zu halten, wird der die Absorptionsstation verlassende Gasstrom zweckmässig einer Nachbehandlung, vorteilhaft einer Wäsche mit vorzugsweise chlorwasserstofffreiem, insbesondere voll entsalztem Wasser unterzogen. Günstig wird die Wasserzugabe so geregelt, dass vor dem endgültigen Austritt des Gasstroms der vom Wasser aufzunehmende Chlorwasserstoffanteil eine höchstens 2 gewichts-%ige Salzsäure ergibt. Aufgrund des über dieser Lösung sich einstellenden Chlorwasserstoffpartialdruckes liegt der HCl-Gehalt des Restgases dann unterhalb 10 ppm und erfüllt damit auch strenge Reinheits- und Sicherheitsanforderungen. Durch weiteren Wasserzusatz kann dieser Wert nötigenfalls weiter gesenkt werden.

Gemäss einer bevorzugten Ausführungsform wird die Wäsche des Gasstromes in einer sich unmittelbar an die Absorptionsstation anschliessenden, günstig oberhalb dieser angeordneten, vorteilhaft als Glokkenbodenkolonne gestalteten Waschstation durchgeführt. Bei dieser Anordnung kann das zugegebene mit dem restlichen Chlorwasserstoff angereicherte Wasser direkt der Salzsäure in der Absorptionsstation zugeschlagen werden und somit, bei geeigneter Einstellung der zugeführten Menge, beispielsweise etwaige Flüssigkeitsverluste ausgleichen. Gleichzeitig werden durch den Waschvorgang im Gasstrom noch enthaltene, bei der Hydrolyse entstandene Kieselsäureaerosolteilchen abgeschieden, so dass auch deren Anteil im austretenden Restgas strengen Massstäben gerecht wird.

Der Chlorwasserstoffgehalt, der im obersten Glokkenboden gebildeten, verdünnten Salzsäure kann z.B. mittels Leitfähigkeitsmessung ständig überwacht werden. Nach Bedarf kann dann die zugegebene Wassermenge gesteigert oder verringert werden, um die gewünschte Konzentration, wie etwa die genannten zwei Gewichts-%, einzustellen.

Das verbleibende Restgas kann, je nach Zusammensetzung einer weiteren Verwendung zugeführt werden. Beispielsweise lässt sich ein im wesentlichen aus Wasserstoff bestehender Gasstrom als Brenngas einsetzen. Gegebenenfalls kann jedoch auch, wie etwa im Falle unschädlicher Gase wie Stickstoff oder Kohlendioxid, das Restgas an die Aussenatmosphäre abgegeben werden, wobei der geringe Chlorwasserstoff- und Kieselsäureaerosolgehalt auch strengen Anforderungen des Umweltschutzes gerecht wird.

Beim Absorptions und Hydrolysevorgang fällt im Sumpf der Absorptionsstation eine Salzsäurelösung an, welche eine gegenüber der vorgelegten Salzsäure erhöhte Chlorwasserstoffkonzentration aufweist und zusätzlich die in Form von Kieselsäure ausgefallenen festen Hydrolyseprodukte des Chlorsilananteiles des Abgasstromes enthält. Diese Mischung, deren Temperatur wegen der Exothermie der Hydrolysereaktion sowie der freiwerdenden Absorptionswärme gegenüber der vorgelegten Salzsäure in der Regel erhöht ist, wird kontinuierlich oder portionsweise abgezogen und in eine Filtrierstation übergeführt, um den Anteil an Feststoffen zu entfernen. Dafür eignen sich übliche Filtriervorrichtungen, beispielsweise Filterpressen wie Bandfilterpressen oder auch Anschwemmfilter. Das abgetrennte Filtergut kann dann entnommen werden und lässt sich, gegebenenfalls nach Auswaschen der Salzsäure, beispielsweise durch Behandlung mit Natronlauge zu den als «Wasserglas» bezeichneten Natriumsilicaten weiterverarbeiten. Diese Vorgehensweise empfiehlt sich insbesondere bei Anschwemmfiltern, bei denen zwischen den Filterschritten das Filtergut durch Rückspülen mit Natronlauge umgesetzt werden kann.

Nach dem Durchgang durch die Filterstation kann die nunmehr feststofffreie Salzsäure entweder, sofern sie den angestrebten Chlorwasserstoffgehalt von in der Regel mindestens 25 Gewichts-% noch nicht erreicht hat, wieder in die Absorptionsstation zur weiteren Aufnahme von Chlorwasserstoff eingeleitet werden. Ansonsten kann sie zur Freisetzung des absorbierten Chlorwasserstoffes in die Desorptionsstation überführt werden. Bisweilen hat es sich auch bewährt, den Gesamtstrom der Salzsäure nach dem Durchgang durch die Filtrierstation in zwei Teilströme aufzuteilen, von denen einer, günstig etwa ein Drittel der Gesamtmenge in die Desorptionsstation eingeleitet wird, während der restliche wieder zurück in die Absorptionsstation fliesst.

Als Desorptionsstation wird günstig eine Glockenbodenkolonne eingesetzt, in der die eingespeiste Salzsäure zum Sieden erhitzt wird und dabei den absorbierten Chlorwasserstoff wieder freisetzt. Letzterer kann am Kopf der Kolonne abgezogen werden und lässt sich beispielsweise nach Trocknung mittels Schwefelsäure bei der Trichlorsilanherstellung durch Umsetzung mit elementarem Silicium einsetzen. Günstig wird bei der Desorption bei einem Überdruck von ca. 2 bis 3 bar und einer Temperatur von etwa 130°C bis 140°C gearbeitet, insbesondere, wenn zur Weiterverwendung Chlorwasserstoff unter erhöhtem Druck benötigt wird.

Im Sumpf der Kolonne sammelt sich die entsprechend den eingestellten Druck- und Temperaturbedingungen zusammengesetzte azeotrope wässrige Salzsäure, welche bei der bevorzugten Ausgestaltung des vorliegenden Verfahrens als Kreisprozess wieder in die Absorptionsstation eingespeist werden kann. Vorteilhaft wird die die Desorptionsstation verlassende, auf hoher Temperatur befindliche Salzsäure über einen Gegenstromwärmetauscher geführt, in dem die mit niedriger Temperatur ankommende zu desorbierende Salzsäure auf höhere Temperatur vorgewärmt wird. Gleichzeitig wird dadurch erreicht, dass die abfliessende Salzsäure möglichst stark abgekühlt wird, wodurch in der Absorptionsstation der Chlorwasserstoffdampfdruck niedrig gehalten und letztendlich auch in der Waschstation die zuzuführende Wassermenge verringert wird.

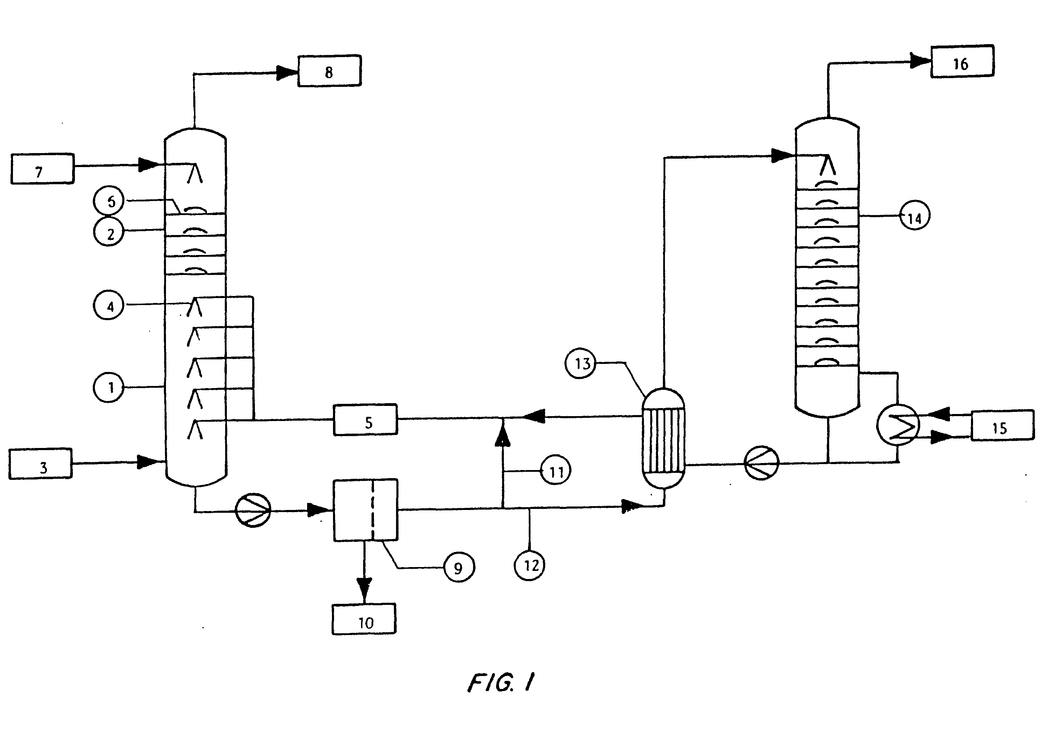

Anhand des in der Figur 1 schematisch dargestellten Fliessbildes wird das erfindungsgemässe Verfahren in seiner Ausgestaltung als Kreisprozess näher erläutert:

In eine die Absorptionsstation 1 und die Waschstation 2 zusammengefasst enthaltene Kolonne wird ein beispielsweise aus Chlorsilanen, Chlorwasserstoff und Wasserstoff bestehender Abgasstrom 3 eingeleitet. Dieser wird zunächst in der Absorptionsstation 1 im Gegenstrom mit über Düsen 4 eingesprühter, mindestens azeotroper wässriger Salzsäure 5 in Kontakt gebracht. Dabei werden die Chlorsilane hydrolisiert und der als Gas vorhandene sowie entstehende Chlorwasserstoff adiabatisch absorbiert. Der verbleibende Wasserstoff gelangt dann in die Waschstation 2, wo in den Glockenböden 6 mit Hilfe des eingespeisten Waschwassers 7 der aus der Absorptionsstation 1 verbliebene Chlorwasserstoffrestanteil sowie gegebenenfalls mitgerissene Kieselsäureaerosolpartikeln abgetrennt werden. Während das Waschwasser nach unten in die Absorptionsstation 1 abfliesst, verlässt ein nunmehr nahezu verunreinigungsfreier Wasserstoffstrom 8 die Waschstation. Günstig wird am obersten Glockenboden 6 eine Messeinrichtung für den dort noch vorhandenen Chlorwasserstoffgehalt des Waschwassers vorgesehen, um gegebenenfalls durch Variation der zugegebenen Waschwassermenge eine Überschreitung des zulässigen Grenzwertes des Chlorwasserstoffanteils im Wasserstoffstrom 8 zu verhindern.

Die im Sumpf der Absorptionsstation sich ansammelnde, aus Waschwasser, den absorbierten Chlorwasserstoff enthaltender Salzsäure sowie darin suspendierten Hydrolyseprodukten bestehende Flüssigkeit wird abgezogen und gelangt in die Filtrierstation 9, wo der Feststoffanteil 10, d.h. im wesentlichen Kieselsäure, abgetrennt und entfernt wird. Der danach verbleibende Flüssigkeitsstrom wird aufgeteilt; während ein Teilstrom 11 wieder zurück zur Absorptionsstation 1 geleitet wird, gelangt der 2. Teilstrom 12 über einen Wärmetauscher 13 in die Desorptionsstation 14. In dieser, einer z.B. mit Dampf 15 beheizten Glockenbodenkolonne, wird durch Destillation der überschüssige Chlorwasserstoffanteil 16 freigesetzt und abgetrennt. Im Sumpf der Kolonne verbleibt die den Druck- und Temperaturbedingungen in der Desorptionsstation 14 entsprechend zusammengesetzte, bei hoher Temperatur vorliegende azeotrope Salzsäure. Sie fliesst zurück in den Wärmetauscher 13, wo sie unter Abkühlung den Teilstrom 12 vorwärmt und wird schliesslich erneut in den Kreislauf des zur Absorptionsstation 1 führenden Teilstromes 11 eingespeist.

Das System stellt somit einen geschlossenen Kreislauf zur Aufarbeitung von chlorsilan- und chlorwasserstoffhaltigen Abgasen dar. Als Endprodukte fallen Kieselsäure sowie, als voneinander getrennte Gase, Chlorwasserstoff und z.B. Wasserstoff an.

In den nachstehenden Beispielen wird das erfindungsgemässe Verfahren näher erläutert:

*Beispiel 1*

In einer entsprechend dem in der Figur 1 dargestellten Fliessschema aufgebauten Anlage war als kombinierte Absorptions- und Waschstation eine Kolonne von 5 m Länge und 200 mm Durchmesser vorgesehen, die in ihrem unteren Teil mit 5 Sprühdüsen, im oberen mit 4 Glockenböden versehen war. Als Filtrierstation diente eine handelsübliche Druckfilteranlage, als Desorptionsstation eine dampfbeheizte Destillierkolonne von 3 m Länge und 100 mm Durchmesser mit 10 Glockenböden, der ein Wärmetauscher vorgeschaltet war.

Die aufzuarbeitende Abgasmischung bestand hauptsächlich aus Wasserstoff mit ca. 3 Volumen-% Trichlorsilan und ca. 10 Volumen-% Chlorwasserstoff als Nebenbestandteil und wurde mit einer bei Normalbedingungen (25°C, 1 bar abs.) ca. 100 m³/ Stunde entsprechenden Durchflussrate in die Absorptionsstation eingeleitet. Dort kam der Gasstrom zunächst mit der über die Düsen eingesprühten, ca. 21 gewichts-%igen Salzsäure, welche in einer Menge von 440 kg/Stunde und mit einer Temperatur von ca. 30°C zugegeben wurde, in Kontakt. Dabei wurde das enthaltene Trichlorsilan hydrolisiert, die entstandene Kieselsäure in der Salzsäure suspendiert und der Chlorwasserstoff adiabatisch absorbiert. In der Gasphase verblieb der Wasserstoff sowie ein geringer Anteil von Chlorwasserstoff und Kieselsäureaerosolpartikeln. Dieser Gasstrom trat nun in die Waschstation ein und durchlief deren 4 Glockenböden, die von oben her mit ca. 35 l/Stunde vollentsalztem Wasser beaufschlagt wurden. Mittels Leitfähigkeitsmessung wurde im obersten Glockenboden überwacht, ob dort durch die Wassermenge die Einhaltung des angestrebten Grenzwertes von höchstens 2 Gew.-% Chlorwasserstoff gewährleistet war. Am Kopf der Kolonne konnte ein Wasserstoffstrom (ca. 90 m³/Stunde bei Normalbedingungen) abgenommen werden, dessen Chlorwasserstoffgehalt unter 10 ppm lag, während der Kieselsäureaerosolanteil weniger als 30 ppm betrug. Diese Werte lagen damit deutlich unterhalb den derzeit in der BRD vorgeschriebenen Grenzwerten von 30 mg/m³ bzw. 50 mg/m³. Die im Sumpf der Kolonne anfallende, die entstehende Kieselsäure enthaltende, mit Chlorwasserstoff angereicherte Salzsäure wurde abgezogen und durchlief dann die Druckfilteranlage. Dabei wurden ca. 38 kg/Stunde Kieselsäureschlamm (Zusammensetzung ca. 18,5 Gewichts-% Kieselsäure, ca. 73,5 Gewichts-% Wasser, ca. 8 Gewichts-% Chlorwasserstoff) abgetrennt.

Die verbleibende, ca. 28 gewichts-%ige Salzsäure wurde in die Desorptionsstation eingeleitet und dort destillativ aufgearbeitet. Dabei konnte am Kopf der Kolonne eine Chlorwasserstoffmenge von 14 m³/ Stunde bei Normalbedingungen abgenommen werden. Am Sumpf der Kolonne fiel eine Menge von 440 kg/Stunde azeotroper Salzsäure (ca. 21 gewichts-%) an, welche abgezogen und erneut in die Absorptionsstation eingeleitet wurde.

*Beispiel 2*

Dieselbe Anlage wurde, bei ansonsten gleicher Verfahrensweise und gleicher Abgaszusammensetzung, mit der Variante betrieben, dass der Salzsäurestrom nach Durchlaufen der Filtrierstation in zwei Teilströme aufgeteilt und die Desorptionskolonne unter 3 bar Überdruck betrieben wurde. Ein Teilstrom von ca. 165 kg/Stunde wurde abgezweigt, in die Desorptionsstation eingespeist und dort destillativ aufgearbeitet. Dabei konnte am Kopf der Kolonne eine Chlorwasserstoffmenge von bei Normalbedingungen ca. 14 m$^3$/Stunde abgenommen werden. Die im Sumpf der Kolonne anfallende, 17 gewichts-%ige azeotrope Salzsäure (ca. 145 kg/Stunde) wurde abgezogen und dem zweiten abgezweigten Teilstrom zugeschlagen, welcher die restliche Salzsäure (ca. 320 kg/Stunde) umfasste. Somit wurden schliesslich in die Absorptionsstation insgesamt ca. 460 kg/Stunde einer ca. 24,5 gewichts-%igen Salzsäure eingesprüht. Nach Durchlaufen der Absorptions- und der Filtrierstation hatte sich der Chlorwasserstoffgehalt auf 28,5 Gewichts-% erhöht.

Die bei dieser Prozessführung erhaltenen Wasserstoff- und Kieselsäuremengen entsprachen den in Beispiel 1 genannten Werten.

**Patentansprüche**

1. Verfahren zur Aufbereitung von chlorsilan- und chlorwasserstoffhaltigen Abgasen durch Hydrolyse unter Verwendung von Salzsäure, dadurch gekennzeichnet, dass in einer Absorptionsstation die Abgase in wässriger, mindestens azeotroper, mit einer Temperatur von weniger als 60°C, vorgelegter Salzsäure hydrolysiert werden, wobei in der flüssigen Phase der entstandene Chlorwasserstoff absorbiert und die festen Hydrolyseprodukte suspendiert werden, während die in der Gasphase verbliebenen Restgase abgetrennt werden, dass in einer Filtrierstation die festen Hydrolyseprodukte aus der flüssigen Phase entfernt werden, und dass in einer Desorptionsstation der in der flüssigen Phase absorbierte Chlorwasserstoff unter Bildung von azeotroper wässriger Salzsäure freigesetzt wird.

2. Verfahren nach Anspruch 1, dadurch gekennzeichnet, dass die in der Desorptionsstation anfallende, wässrige azeotrope Salzsäure im Kreislauf erneut in die Absorptionsstation eingespeist wird.

3. Verfahren nach den Ansprüchen 1 und 2, dadurch gekennzeichnet, dass die in der Absorptionsstation abgetrennten Restgase mit chlorwasserstofffreiem Wasser in Kontakt gebracht werden, welches danach der wässrigen, mindestens azeotropen Salzsäure zugeschlagen wird.

4. Verfahren nach Anspruch 3, dadurch gekennzeichnet, dass die Wasserzugabe so geregelt wird, dass vor dem endgültigen Austritt der Restgase der vom Wasser aufzunehmende Chlorwasserstoff eine höchstens 2 gewichts-%ige Salzsäure ergibt.

5. Verfahren nach einem oder mehreren der Ansprüche 1 bis 4, dadurch gekennzeichnet, dass die die Desorptionsstation verlassende Salzsäure über einen Wärmetauscher geleitet wird, in welchem die der Desorptionsstation zugeführte Salzsäure vorgewärmt wird.

6. Verfahren nach den Ansprüchen 1 bis 5, dadurch gekennzeichnet, dass nach Abtrennung der festen Hydrolyseprodukte die flüssige Phase in zwei Teilströme aufgeteilt wird, von denen einer in die Absorptionsstation, der andere in die Desorptionsstation eingeleitet wird.

**Claims**

1. Process for the treatment of exhaust gases containing chlorosilanes and hydrogen chloride by hydrolysis, using hydrochloric acid, characterized in that the exhaust gases are hydrolyzed in an absorption station in aqueous and at least azeotropic hydrochlorid acid taken at a temperature of less than 60°C, the hydrogen chloride formed being absorbed and the solid hydrolysis products being suspended in the liquid phase, whilst the residual gases which remain in the gas phase are separated off, in that the solid hydrolysis products are removed from the liquid phase in a filtering station, and in that the hydrogen chloride absorbed in the liquid phase is liberated in a desorption station to form azeotropic aqueous hydrochloric acid.

2. Process according to Claim 1, characterized in that the aqueous aezotropic hydrochloric acid obtained in the desorption station is fed again into the absorption station in circulation.

3. Process according to Claims 1 and 2, characterized in that the residual gases removed in the absorption station are brought into contact with water containing no hydrogen chloride, and this is then mixed with the aqueous and at least azeotropic hydrochloric acid.

4. Process according to Claim 3, characterized in that the addition of water is regulated so that, before final discharge of the residual gases, the hydrogen chloride to be absorbed by the water results in a hydrochloric acid of not more than 2% stength by weight.

5. Process according to one or more of Claims 1 to 4, characterized in that the hydrochloric acid leaving the desorption station is passed over a heat exchanger in which the hydrochloric acid fed to the desorption station is prewarmed.

6. Process according to Claims 1 to 5, characterized in that after removal of the solid hydrolysis products, the liquid phase is divided into two part streams, one of which is passed to the absorption station and the other of which is passed to the desorption station.

**Revendications**

1. Procédé pour traiter par hydrolyse, en utilisant de l'acide chlorhydrique, les gaz résiduaires contenant des chlorosilanes et du chlorure d'hydrogène, procédé caractérisé en ce qu'en un poste d'absorption, les gaz résiduaires sont hydrolysés dans de l'acide chlorhydrique aqueux placé au préalable, ayant au moins la concentration de l'azéotrope et présentant une température inférieure à 60°C, de sorte que le chlorure d'hydrogène résultant est absorbé en phase liquide et les produits solides de l'hydrolyse sont mis en suspension, cependant que les gaz restant dans la phase gazeuse sont séparés; en ce que, dans un poste de filtration, les produits solides de l'hydrolyse sont enlevés de la phase liquide, et en ce que, dans un poste de désorption, le chlorure d'hydrogène absorbé en phase liquide est libéré avec formation d'acide chlorhydrique aqueux azéotrope.

2. Procédé selon la revendication 1, caractérisé en ce que, l'acide chlorhydrique aqueux azéotrope, obtenu au poste de désorption, est introduit à nouveau en circuit fermé au poste d'absorption.

3. Procédé selon les revendications 1 et 2, caractérisé en ce que les gaz restants, séparés au poste d'absorption, sont mis en contact avec de l'eau ne comportant par de chlorure d'hydrogène et qui est ensuite ajoutée à l'acide chlorhydrique aqueux dont la concentration correspond au moins à celle de l'azéotrope.

4. Procédé selon la revendication 3, caractérisé en ce que l'addition d'eau est réglée de manière qu'avant la sortie finale du gaz résiduaire, le chlorure d'hydrogène à absorber par l'eau donne un acide chlorhydrique à 2% en poids au maximum.

5. Procédé selon une ou plusieurs des revendications 1 à 4, caractérisé en ce que l'acide chlorhydrique sortant du poste de désorption est acheminé par un échangeur de chaleur, dans lequel l'acide chlorhydrique envoyé au poste de désorption est réchauffé.

6. Procédé selon la revendication 1 à 5, caractérisé en ce que, après séparation des produits solides d'hydrolyse, la phase liquide est subdivisée en deux courants partiels, dont l'un est envoyé au poste d'absorption et l'autre est envoyé au poste de désorption.

FIG. I